# EUROPÄISCHE PATENTSCHRIFT

(11) **EP 2 915 649 B1**
(45) Veröffentlichungstag und Bekanntmachung des Hinweises auf die Patenterteilung: **21.12.2016**
(21) Anmeldenummer: 15000378.8
(22) Anmeldetag: 09.02.2015
(51) Int. Cl.: B29C 45/16, B29C 45/28

(54) **Düsensystem einer Spritzgießmaschinen-Spritzeinheit**
Nozzle system of an injection moulding machine injection unit
Système de buses d'une unité d'injection de machines de moulage par injection

(30) Priorität: 03.03.2014 DE 102014002728
(43) Veröffentlichungstag der Anmeldung: 09.09.2015
(73) Patentinhaber: Wittmann Battenfeld GmbH, 2542 Kottingbrunn (AT)
(72) Erfinder: Halbfas, Michael, 57271 Hilchenbach (DE); Beaupain, Ulrich, 58540 Meinerzhagen (DE); Kirsch, Edmund, 2500 Baden (AT)
(74) Vertreter: Gosdin, Michael

(56) Entgegenhaltungen:
- WO-A1-99/52699
- DE-A1- 3 912 426

## Beschreibung

Die Erfindung betrifft ein Düsensystem einer Spritzgießmaschinen-Spritzeinheit, das zum Spritzen von Kunststoffformteilen aus mindestens zwei Komponenten zum Zusammenwirken mit mindestens zwei Kunststoffplastifiziereinheiten ausgebildet ist, wobei das Düsensystem zwei Fließwege zum Zuführen der Kunststoffschmelze der beiden Komponenten zu einer Düsenspitze aufweist und wobei Ventilmittel zum gesteuerten Zuführen der Kunststoffschmelze der beiden Komponenten zur Düsenspitze im Düsensystem vorhanden sind.

Ein gattungsgemäßes Düsensystem ist aus der DE 36 32 185 C2 bekannt. Mit einer Schließnadel ist es möglich, den Schmelzefluss von zwei Plastifiziereinheiten zu steuern. Hierzu wird die Schließnadel zum einen translatorisch entlang ihrer Achse verschoben, um einen Ventilsitz im axialen Endbereich der Schließnadel zu öffnen oder zu schließen, wodurch für eine der Komponenten der Fließweg freigegeben oder verschlossen wird. Zum anderen wird die Schließnadel um ihre Längsachse gedreht, um einen in ihr verlaufenden Schmelzekanal in fluidische Verbindung mit der anderen Plastifiziereinheit zu bringen oder diese Verbindung zu unterbrechen.

Vorgesehen ist bei der vorbekannten Lösung also, dass durch eine kombinierte Translations- und Rotationsbewegung der Düsennadel der gesteuerte Schmelzefluss der beiden Kunststoffkomponenten bewerkstelligt wird.

Ähnliche Lösungen offenbaren auch die DE 36 32 928 A1 und die DE 39 12 426 A1**.**

Bei einer solchen Lösung bestehen allerdings zwei Problemkreise. Zum einen ist der konstruktive Aufbau relativ kompliziert, da auf relativ engem Raum die kombinierte Längs- und Drehbewegung der Düsennadel untergebracht werden muss. Die Bewegungsaktuatoren müssen hierzu in das Düsensystem integriert werden, wozu sie klein bauen müssen. Dies hat dort seine Grenzen, wo hinreichende Kräfte aufgebaut werden müssen, um zuverlässig gegen den hohen Spritzdruck (bis zu 3.000 bar) abdichten zu können.

Auf der anderen Seite ist die Düsennadel auch von den beiden Schmelzeströmen durch- bzw. umströmt. Dadurch besteht die Gefahr, dass sich im Laufe der Zeit Verunreinigungen im Düsenbereich ergeben und der Spritzgießprozess nicht mehr zuverlässig und stabil durchgeführt werden kann.

Der Erfindung liegt daher die **Aufgabe** zugrunde, ein Düsensystem der eingangs genannten Art so fortzubilden, dass die genannten Nachteile vermieden werden. Somit soll sowohl ein einfacher konstruktiver Aufbau des Systems gegeben sein als auch eine hohe Prozessstabilität gewährleistet werden. Ferner besteht die Zielrichtung, einen Düsenverschluss, insbesondere denjenigen für das in der Mitte liegende Material, möglichst dicht am Ende des Düsenkopfes herzustellen.

Die **Lösung** dieser Aufgabe durch die Erfindung ist dadurch gekennzeichnet, dass das Düsensystem aufweist:
- einen ortsfest angeordneten hohlzylindrischen Führungskörper, wobei ein erster Fließweg in den radial innenliegenden Bereich des Führungskörpers führt und wobei ein zweiter Fließweg in den radial außenliegenden Bereich des Führungskörpers führt,
- eine konzentrisch zum Führungskörper angeordnete Düsennadel, die im radial innenliegenden Bereich des Führungskörpers angeordnet ist und deren der Düsenspitze zugewandtes Ende einen Dichtabschnitt aufweist, der mit einem im Führungskörper ausgebildeten Gegenabschnitt zusammenwirkt, wobei die Düsennadel mit ihrem von der Düsenspitze entfernten Ende mit einem ersten Betätigungselement verbunden ist, das zur Ausübung einer rein translatorischen Verschiebebewegung der Düsennadel ausgebildet ist, und
- ein konzentrisch zum Führungskörper angeordnetes Düsenelement, das im radial außenliegenden Bereich des Führungskörpers angeordnet ist und das mindestens einen ersten Fluidkanal aufweist, der mit mindestens einem im Führungskörper angeordneten und zur Düsenspitze führenden zweiten Fluidkanal durch Drehung des Düsenelements in fluidische Verbindung gebracht werden kann, wobei das Düsenelement mit einem zweiten Betätigungselement verbunden ist, das zur Ausübung einer reinen Drehbewegung des Düsenelements ausgebildet ist.

Das erste Betätigungselement weist bevorzugt einen mit seinem einen Ende gelenkig im Düsensystem gelagerten ersten Hebel auf, der mit seinem anderen Ende mit einem ersten Aktuator verbunden ist, wobei die Düsennadel zwischen den beiden Enden des ersten Hebels mit diesem verbunden ist. Der erste Aktuator ist dabei bevorzugt als elektrischer, pneumatischer oder hydraulischer Linearaktuator ausgebildet.

Das zweite Betätigungselement umfasst bevorzugt einen zweiten und einen dritten Hebel, die parallel zueinander angeordnet und an einem ihrer Enden mit einem Verbindungselement miteinander verbunden sind, wobei der zweite Hebel in einer Achse gelenkig gelagert ist und der zweite Hebel an einem seiner Enden mit einem zweiten Aktuator verbunden ist und wobei der dritte Hebel mit dem Düsenelement fest verbunden ist und bei der Betätigung des zweiten Aktuators dieses um seine Achse dreht. Der dritte Hebel ist dabei bevorzugt mit seinem vom Verbindungselement entfernten Ende mit einem weiteren Verbindungselement am zweiten Hebel gelenkig gelagert. Der zweite Aktuator ist bevorzugt als elektrischer, pneumatischer oder hydraulischer Linearaktuator ausgebildet.

Der erste und/oder der zweite Aktuator sind mit Vorteil außerhalb der Grundgeometrie des Düsensystems angeordnet.

Das Düsensystem weist bevorzugt eine Zwischenplatte auf, in der die Fließwege zum Zuführen der Kunststoffschmelze der beiden Komponenten abschnittsweise verlaufen, wobei die Fließwege von der Mittenachse des Düsensystems gleich weit beabstandet sind. Dies eröffnet die Möglichkeit, die Düse an der Zwischenplatte in zwei verschiedenen Positionen, die um die Längsachse des Düsensystems um 180° verdreht sind, zu montieren und so die Schmelzeflüsse von Haut- und Kernmaterial zu vertauschen.

Das Düsenelement kann weiterhin eine in Umfangsrichtung umlaufende Nut aufweisen, in die der mindestens eine Fluidkanal einmündet, wobei der eine Fließweg zum Zuführen der Kunststoffschmelze der einen Komponenten in den Bereich der Nut mündet.

Die beiden Fluidkanäle bilden bevorzugt einen linearen Fließweg, der sich unter einem Winkel (bevorzugt zwischen 30° und 60°) zur Mittenachse des Düsensystems in den Bereich der Düsenspitze erstreckt.

Das vorgeschlagene Düsensystem ist also nicht als Einnadelsystem ausgebildet, sondern hat Verschlüsse für die beiden Materialaustritte, die separat betätigt werden.

Zum einen ist eine zentrale Verschlussnadel vorgesehen, die ausschließlich translatorisch bewegt wird. Der Verschluss des außenliegenden Massestroms erfolgt dagegen ausschließlich durch Drehen eines Hohlzylinders, der die Verbindung zu den Massekanälen unterbricht.

Der Verschluss für das Hautmaterial liegt somit in der Nähe der genannten Ringnut für das Hautmaterial. Durch diese Anordnung wird erreicht, dass die bei der eingangs genannten Lösung konzentrisch ineinander laufenden Düsen getrennt wurden. Die Verschlussnadel für das Kernmaterial läuft in dem inneren Hohlzylinder, der nicht bewegt wird.

Der äußere Hohlzylinder dreht sich auf dem inneren feststehenden Hohlzylinder. Da die Nadelverschlüsse für das Haut- und das Kernmaterial nicht direkt miteinander in Berührung kommen, können die Antriebe für die Verschlüsse von Haut- und Kernmaterial getrennt ausgeführt werden. Hierdurch kann eine kleinbauende Konstruktion erreicht werden.

Dennoch erlaubt die vorgeschlagene Konstruktion das unabhängige Öffnen und Schließen beider Düsenkanäle für das Haut- und das Kernmaterial und somit auch ein gleichzeitiges Einspritzen beider Komponenten.

Durch die genannte Zwischenplatte mit symmetrischer Anordnung der beiden Fließwege ist es möglich, dass die Düse demontiert, um 180° um die Zentralachse des Düsensystems gedreht und in dieser Stellung wieder an die Zwischenplatte montiert wird. Dadurch können die Kanäle für Haut- und Kernmaterial vertauscht werden. Das Hautmaterial wird dann durch die Mitte und das Kernmaterial außen herum geführt. Das ist für spezielle Anwendungen vorteilhaft.

Die Betätigungen für das Drehen des außenliegenden Hohlzylinders und die translatorische Bewegung der innenliegenden Verschlussnadel sind mit Vorteil außerhalb des Düsenkörpers und der Düse angeordnet. Damit ergibt sich eine gute Zugänglichkeit der Betätigungen und eine einfache Demontage der schmelzeführenden Teile.

Die beiden Massestränge für das Haut- und das Kernmaterial sind konzeptionell durch den axial und radial feststehenden inneren Hohlzylinder getrennt. Ineinander laufenden Verschlussnadeln werden damit vermieden. Jeder Verschluss hat auf einer Seite als Begrenzung den inneren Hohlzylinder.

Die Zuführung des aus dem Kanal für das Hautmaterial strömenden Materials erfolgt bevorzugt durch mindestens eine schräg verlaufende Bohrung zur Mitte des Düsenaustritts und bildet hier einen Vollstrang.

Damit werden verschiedene Vorteile erreicht:

Es ist zunächst eine kleinbauende Konstruktion mit geringem Außendurchmesser möglich.

Es gibt keine ineinander laufenden verschiebbaren Verschlussnadeln wie bei der eingangs genannten vorbekannten Lösung.

Es liegen getrennte Betätigungszylinder für den translatorischen und den rotatorischen Düsenverschluss vor.

Eine gute Zugänglichkeit zu den außen liegenden Betätigungszylindern ist gegeben.

Die genannte Drehbarkeit der Düse um 180° (die an der Zwischenplatte montiert ist) ist ohne hohen Montageaufwand gegeben. Es muss lediglich die Verschraubung zwischen Düse und Zwischenplatte gelöst werden.

Es liegt eine gute Erreichbarkeit aller masseführenden Teile vor.

Weiterhin ist eine einfache Demontagemöglichkeit zwecks Reinigung gegeben.

Es sind keine aufwändig herzustellenden Herzkurven nach der Umlenkung der Schmelze über einen Nadelaußendurchmesser erforderlich.

Beim Einspritzen des Hautmaterials erfolgt keine Masseteilung vor dem Austritt aus der Düse. Das durch die Schrägbohrungen zur Düsenspitze geführte Material verbindet sich wieder zu einem Vollstrang.

Die vorgeschlagene Lösung kann mit dem Konzept kombiniert werden, wonach die Achse der translatorischen Bewegung der Schließnadel mit der translatorischen Verschiebeachse einer Schubschnecken-Plastifiziereinheit (Spritzeinheit) für die eine Künststoffkomponente identisch ist. Die zweite Spritzeinheit sitzt dann versetzt zu dieser Achse entweder parallel oder schräg.

Es kann auch vorgesehen werden, dass die zentral sitzende Kunststoff-Plastifiziereinheit als Schubschneckeneinheit ausgebildet ist, während die zweite, seitlich angesetzte Einheit als reine Plastifiziereinheit ausgebildet ist. Generell ist auch die umgekehrte Anordnung möglich.

In der Zeichnung ist ein Ausführungsbeispiel der Erfindung dargestellt. Es zeigen:

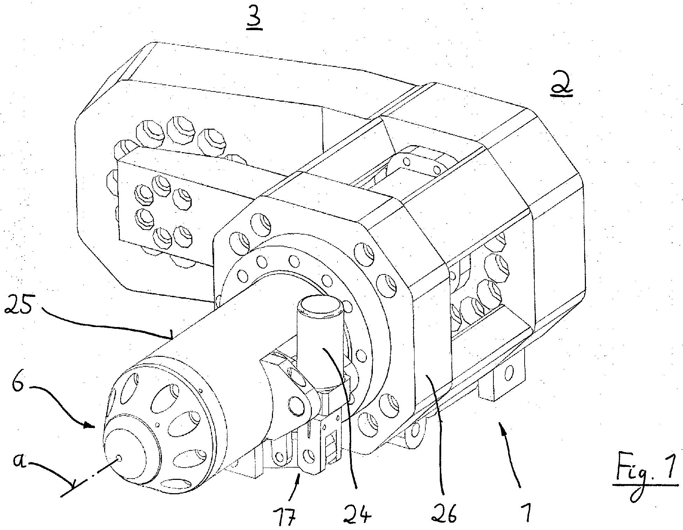

- Fig. 1: eine perspektivische Ansicht eines Düsensystems gemäß der Erfindung,

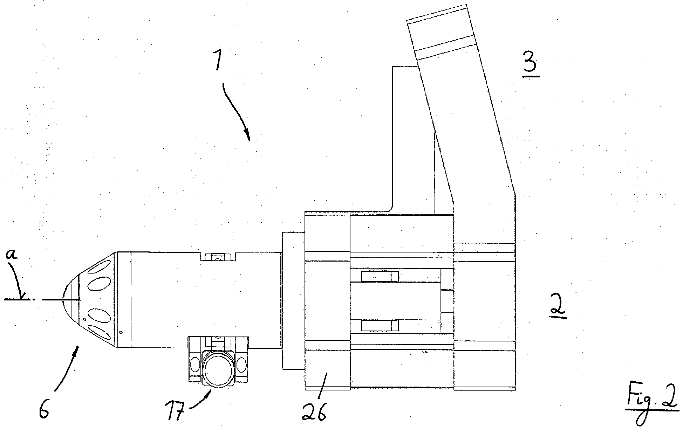

- Fig. 2: das Düsensystem gemäß Fig. 1 in der Draufsicht,
- Fig. 3: eine perspektivische, teilweise geschnittene Ansicht des Bereichs der Düsenspitze des Düsensystems, wobei das äußere Gehäuse nicht dargestellt ist,
- Fig. 4: die geschnittene Seitenansicht des Düsensystems mit der Darstellung eines ersten Betätigungselements zur translatorischen Verschiebung einer Düsennadel und
- Fig. 5: eine perspektivische Darstellung eines zweiten Betätigungselements zur Drehung eines Düsenelements.

In den Figuren ist ein Düsensystem 1 zu sehen, das von zwei Kunststoffplastifiziereinheiten 2 und 3 für das Haut- und Kernmaterial mit Kunststoffschmelze versorgt wird; die beiden Kunststoffplastifiziereinheiten 2 und 3 sind dabei nur mit Bezugsziffern angedeutet, es kommen übliche Einheiten zum Einsatz, die zumeist als Schubschnecken-Plastifizier- und Spritzeinheiten ausgebildet sind. Die eine Kunststoffplastifiziereinheit 2 ist dabei konzentrisch zur Mittenachse a des Düsensystems 1 angeordnet, die andere Einheit 3 ist seitlich angesetzt.

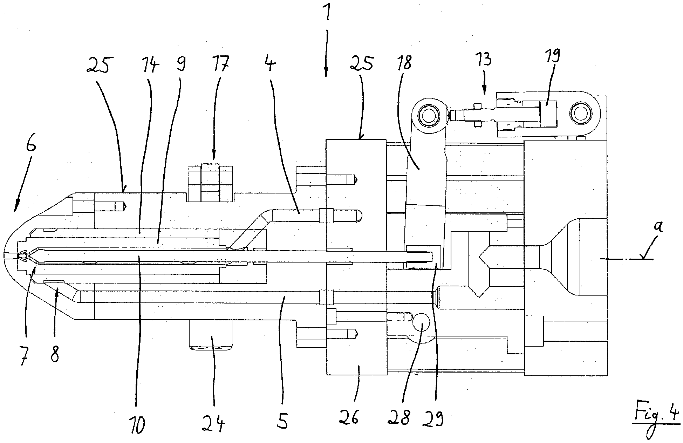

Im Düsensystem 1 werden ein erster Fließweg 4 und ein zweiter Fließweg 5 (s. Fig. 4) für die beiden Schmelzekomponenten ausgebildet, um die Schmelze von den Kunststoffplastifiziereinheiten 2, 3 zu einer Düsenspitze 6 zu führen, von wo aus das Kunststoffmaterial in bekannter Weise in ein nicht dargestelltes Spritzgießwerkzeug eingespritzt wird. Zur gesteuerten Zuführung der beiden Kunststoffkomponenten sind Ventilmittel 7 und 8 für jede der beiden Masseströme vorhanden.

Zentrales Element des Düsensystems 1 ist zunächst ein ortsfest angeordneter hohlzylindrischer Führungskörper 9. Dabei führt der erste Fließweg 4 in den radial innenliegenden Bereich des Führungskörpers 9; der zweiter Fließweg 5 führt indes in den radial außenliegenden Bereich des Führungskörpers 9.

Zur Steuerung des Schmelzeflusses der zentral zugeführten Kernkomponente ist eine konzentrisch zum Führungskörper 9 angeordnete Düsennadel 10 vorhanden, die im radial innenliegenden Bereich des Führungskörpers 9 angeordnet ist. Die Düsennadel 10 weist in ihrem der Düsenspitze 6 zugewandten Ende einen Dichtabschnitt 11 auf, der mit einem im Führungskörper 9 ausgebildeten Gegenabschnitt 12 zusammenwirkt. Hingegen ist die Düsennadel 10 mit ihrem von der Düsenspitze 6 entfernten Ende mit einem ersten Betätigungselement 13 verbunden. Dieses Betätigungselement ist zur Ausübung einer reinen translatorischen Verschiebebewegung der Düsennadel 10 ausgebildet.

Zur Steuerung des Schmelzeflusses der von außen zugeführten Hautkomponente ist ein konzentrisch zum Führungskörper 9 angeordnetes Düsenelement 14 vorgesehen, das im radial außenliegenden Bereich des Führungskörpers 9 angeordnet ist.

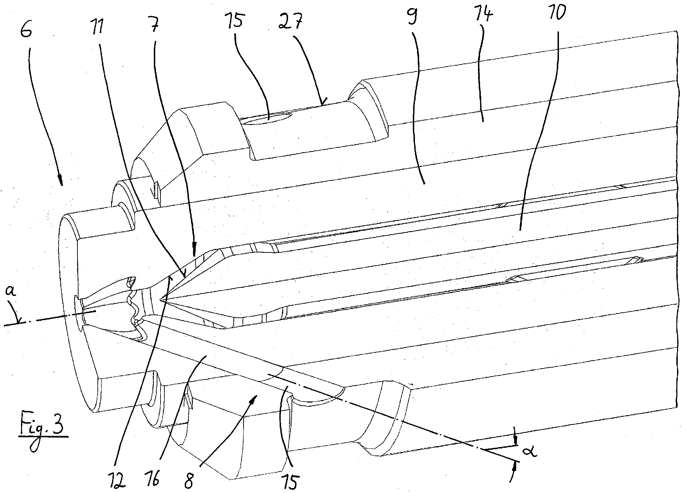

Das Düsenelement 14 hat mindestens einen ersten Fluidkanal 15 (s. Fig. 3), der mit mindestens einem im Führungskörper 9 angeordneten und zur Düsenspitze 6 führenden zweiten Fluidkanal 16 durch Drehung des Düsenelements 14 in fluidische Verbindung gebracht werden kann. Das Düsenelement 14 ist dabei mit einem zweiten Betätigungselement 17 verbunden, das zur Ausübung einer reinen Drehbewegung des Düsenelements 14 ausgebildet ist. Wie im Ausführungsbeispiel (in Fig. 3) zu sehen ist, erstrecken sich die beiden Fluidkanäle, wenn sie durch Drehen des Düsenelements 14 - wie dargestellt - in fluidische Verbindung gebracht sind, linear und unter einem Winkel α zur Mittenachse des Düsenelements 1.

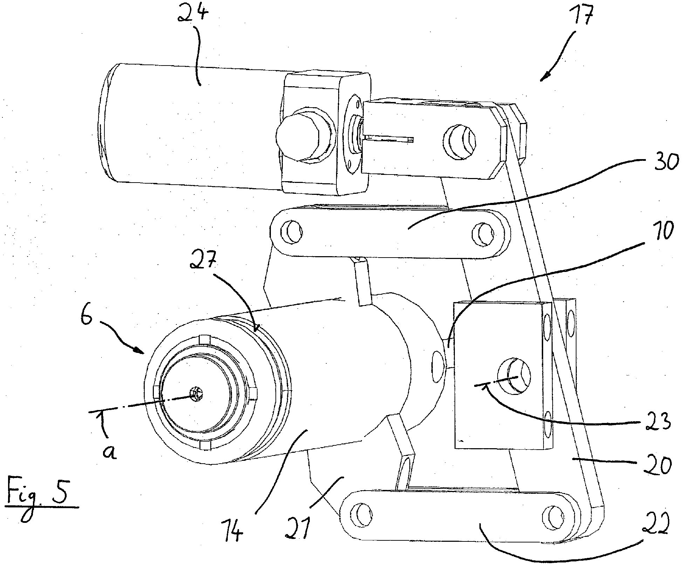

Der genaue Aufbau für die beiden Betätigungselemente 13 (für die translatorische Bewegung der Düsennadel 10) und 17 (für die Drehung des Düsenelements 14) geht aus Fig. 4 und Fig. 5 hervor.

Das erste Betätigungselement 13 hat einen ersten Hebel 18, der in einer Lagerachse 28 mit seinem einen Ende gelagert ist. Das andere Ende des ersten Hebels 18 ist mit einem ersten Aktuator 19 verbunden, der zur Ausübung einer translatorischen Stellbewegung ausgebildet ist. Die Düsennadel 10 ist zwischen den beiden Enden des ersten Hebels 18 befestigt. Die Verkippung des ersten Hebels 18 bei der Betätigung des ersten Betätigungselements 13 an der Stelle der Befestigung der Düsennadel 10 ist minimal und wird durch eine Aufnahmebuchse 29 ausgeglichen.

Das zweite Betätigungselement 17 weist zwei Hebel, nämlich einen zweiten Hebel 20 und einen dritten Hebel 21, auf (s. Fig. 5), die über ein Verbindungselement 22 endseitig miteinander verbunden sind; eine weitere Verbindung zwischen dem zweiten Hebel 20 und dem dritten Hebel 21 besteht über ein weiteres Verbindungselement 30. Der zweite Hebel 20 ist in einer Achse 23 ortsfest im Düsensystem 1 gelagert. Das Düsenelement 14 ist drehfest mit dem dritten Hebel 21 verbunden. Wird nun der zweite Aktuator 24 linear betätigt, rotiert das Düsenelement 14 um die Mittenachse a des Düsensystems 1. Durch besagte Drehung werden die Fluidkanäle 15 und 16 (s. Fig. 3) entweder fluidisch verbunden oder fluidisch getrennt, wodurch die Steuerung des Masseflusses möglich ist. Im Bereich des ersten Fluidkanals 15 befindet sich hierzu im Düsenelement 14 eine Nut 27 (Ringnut), die für die gute Schmelzebereitstellung vor dem ersten Fluidkanal 15 sorgt.

Die Zwischenplatte 26 (s. Fig. 4) ist so ausgeführt, dass die durch sie verlaufenden Fließwege 4, 5 für die beiden Schmelzekomponenten symmetrisch zur Mittenachse a ausgebildet sind. Daher kann durch Drehen der Düse (d. h. des Bauteils mit der Düsenspitze 6) um die Mittenachse a um 180° ein Vertauschen der beiden Fließwege erfolgen, was bei bestimmten Anwendungen vorteilhaft ist.

Aus den Figuren geht hervor, dass die beiden Betätigungselemente 13 und 17 aus der Grundgeometrie 25 des Düsensystems 1 herausragen. Damit ist eine einfache Konstruktion und im übrigen eine gute Zugänglichkeit gegeben.

### Bezugszeichenliste:

- 1: Düsensystem
- 2: erste Kunststoffplastifiziereinheit
- 3: zweite Kunststoffplastifiziereinheit
- 4: erster Fließweg
- 5: zweiter Fließweg
- 6: Düsenspitze
- 7: Ventilmittel
- 8: Ventilmittel
- 9: Führungskörper
- 10: Düsennadel
- 11: Dichtabschnitt
- 12: Gegenabschnitt
- 13: erstes Betätigungselement
- 14: Düsenelement
- 15: erster Fluidkanal
- 16: zweiter Fluidkanal
- 17: zweites Betätigungselement
- 18: erster Hebel
- 19: erster Aktuator
- 20: zweiter Hebel
- 21: dritter Hebel
- 22: Verbindungselement
- 23: Achse
- 24: zweiter Aktuator
- 25: Grundgeometrie des Düsensystems
- 26: Zwischenplatte
- 27: Nut (Ringnut)
- 28: Lagerachse
- 29: Aufnahmebuchse
- 30: Verbindungselement

- a: Mittenachse des Düsensystems

- α: Winkel

## Patentansprüche

1. Düsensystem (1) einer Spritzgießmaschinen-Spritzeinheit, das zum Spritzen von Kunststoffformteilen aus mindestens zwei Komponenten zum Zusammenwirken mit mindestens zwei Kunststoffplastifiziereinheiten (2, 3) ausgebildet ist, wobei das Düsensystem (1) zwei Fließwege (4, 5) zum Zuführen der Kunststoffschmelze der beiden Komponenten zu einer Düsenspitze (6) aufweist und wobei Ventilmittel (7, 8) zum gesteuerten Zuführen der Kunststoffschmelze der beiden Komponenten zur Düsenspitze (6) im Düsensystem (1) vorhanden sind,
**dadurch gekennzeichnet, dass**
das Düsensystem (1) aufweist:
- einen ortsfest angeordneten hohlzylindrischen Führungskörper (9), wobei ein erster Fließweg (4) in den radial innenliegenden Bereich des Führungskörpers (9) führt und wobei ein zweiter Fließweg (5) in den radial außenliegenden Bereich des Führungskörpers (9) führt,
- eine konzentrisch zum Führungskörper (9) angeordnete Düsennadel (10), die im radial innenliegenden Bereich des Führungskörpers (9) angeordnet ist und deren der Düsenspitze (6) zugewandtes Ende einen Dichtabschnitt (11) aufweist, der mit einem im Führungskörper (9) ausgebildeten Gegenabschnitt (12) zusammenwirkt, wobei die Düsennadel (10) mit ihrem von der Düsenspitze (6) entfernten Ende mit einem ersten Betätigungselement (13) verbunden ist, das zur Ausübung einer translatorischen Verschiebebewegung der Düsennadel (10) ausgebildet ist, und
- ein konzentrisch zum Führungskörper (9) angeordnetes Düsenelement (14), das im radial außenliegenden Bereich des Führungskörpers (9) angeordnet ist und das mindestens einen ersten Fluidkanal (15) aufweist, der mit mindestens einem im Führungskörper (9) angeordneten und zur Düsenspitze (6) führenden zweiten Fluidkanal (16) durch Drehung des Düsenelements (14) in fluidische Verbindung gebracht werden kann, wobei das Düsenelement (14) mit einem zweiten Betätigungselement (17) verbunden ist, das zur Ausübung einer Drehbewegung des Düsenelements (14) ausgebildet ist.

2. Düsensystem nach Anspruch 1, **dadurch gekennzeichnet, dass** das erste Betätigungselement (13) einen mit seinem einen Ende gelenkig im Düsensystem (1) gelagerten ersten Hebel (18) aufweist, der mit seinem anderen Ende mit einem ersten Aktuator (19) verbunden ist, wobei die Düsennadel (10) zwischen den beiden Enden des ersten Hebels (18) mit diesem verbunden ist.

3. Düsensystem nach Anspruch 2, **dadurch gekennzeichnet, dass** der erste Aktuator (19) als elektrischer, pneumatischer oder hydraulischer Linearaktuator ausgebildet ist.

4. Düsensystem nach einem der Ansprüche 1 bis 3, **dadurch gekennzeichnet, dass** das zweite Betätigungselement (17) einen zweiten und einen dritten Hebel (20, 21) umfasst, die parallel zueinander angeordnet und an einem ihrer Enden mit einem Verbindungselement (22) miteinander verbunden sind, wobei der zweite Hebel (20) in einer Achse (23) gelenkig gelagert ist, wobei der zweite Hebel (20) an einem seiner Enden mit einem zweiten Aktuator (24) verbunden ist und wobei der dritte Hebel (21) mit dem Düsenelement (14) fest verbunden ist und bei der Betätigung des zweiten Aktuators (24) dieses um seine Achse (a) dreht.

5. Düsensystem nach Anspruch 4, **dadurch gekennzeichnet, dass** der dritte Hebel (21) mit seinem vom Verbindungselement (22) entfernten Ende mit einem weiteren Verbindungselement (30) am zweiten Hebel (20) gelenkig gelagert ist.

6. Düsensystem nach Anspruch 4 oder 5, **dadurch gekennzeichnet, dass** der zweite Aktuator (24) als elektrischer, pneumatischer oder hydraulischer Linearaktuator ausgebildet ist.

7. Düsensystem nach einem der Ansprüche 2 bis 6, **dadurch gekennzeichnet, dass** der erste und/oder der zweite Aktuator (19, 24) außerhalb der Grundgeometrie (25) des Düsensystems (1) angeordnet sind.

8. Düsensystem nach einem der Ansprüche 1 bis 7, **dadurch gekennzeichnet, dass** es eine Zwischenplatte (26) aufweist, in der die Fließwege (4, 5) zum Zuführen der Kunststoffschmelze der beiden Komponenten abschnittsweise verlaufen, wobei die Fließwege (4, 5) von der Mittenachse (a) des Düsensystems (1) gleich weit beabstandet sind.

9. Düsensystem nach einem der Ansprüche 1 bis 8, **dadurch gekennzeichnet, dass** das Düsenelement (14) eine in Umfangsrichtung umlaufende Nut (27) aufweist, in die der mindestens eine Fluidkanal (15) einmündet, wobei der eine Fließweg (5) zum Zuführen der Kunststoffschmelze der einen Komponente in den Bereich der Nut (27) mündet.

10. Düsensystem nach einem der Ansprüche 1 bis 9, **dadurch gekennzeichnet, dass** die beiden Fluidkanäle (15, 16) einen linearen Fließweg bilden, der sich unter einem Winkel (α) zur Mittenachse (a) des Düsensystems (1) in den Bereich der Düsenspitze (6) erstreckt, wobei der Winkel (α) vorzugsweise zwischen 30° und 60° liegt.

## Claims

1. Nozzle system (1) for an injection unit of an injection moulding machine, which is designed for the injection moulding of plastic form parts from at least two components for the cooperation with at least two plastic plasticating units (2, 3), wherein the nozzle system (1) comprises two flow paths (4, 5) for feeding of the plastic melt of the both components to a sprue (6) and wherein valve means (7, 8) are arranged in the nozzle system (1) for the controlled feeding of plastic melt of the both components to the sprue (6),
**characterized in that**
the nozzle system (1) comprises:
- a stationary arranged hollow-cylindrical guiding body (9), wherein a first flow path (4) leads in the radial inner region of the guiding body (9) and wherein a second flow path (5) leads in the radial outer region of the guiding body (9),
- a nozzle needle (10) which is arranged concentrically to the guiding body (9), which is arranged in the radial inner region of the guiding body (9) and which end which is facing the sprue (6) comprises a sealing section (11) which is cooperating with a counter section (12) which is formed in the guiding body (9), wherein the nozzle needle (10) is connected with its end which is remote from the sprue (6) with a first actuating element (13) which is designed for carrying out a translational displacement movement of the nozzle needle (10) and
- a nozzle element (14) which is arranged concentrically to the guiding body (9), which is arranged in the radial outer region of the guiding body (9) and which comprises at least one first fluid channel (15) which can be brought in fluidic connection with a second fluid channel (16) which is arranged in the guiding body (9) and which leads to the sprue (6) by rotation of the nozzle element (14), wherein the nozzle element (14) is connected with a second actuating element (17) which is designed for carrying out a rotational movement of the nozzle element (14).

2. Nozzle system according to claim 1, **characterized in that** the first actuating element (13) comprises a first lever (18) which is supported articulated with one of its end in the nozzle system (1) which is connected with its other end with a first actuator (19), wherein the nozzle needle (10) is connected with the lever (18) between the two ends of the same.

3. Nozzle system according to claim 2, **characterized in that** the first actuator (19) is designed as electrical, pneumatical or hydraulical linear actuator.

4. Nozzle system according to one of claims 1 to 3, **characterized in that** the second actuating element (17) comprises a second and a third lever (20, 21) which are arranged parallel to another and which are connected with another with a connection element (22) at one of its ends, wherein the second lever (20) is supported articulated in an axis (23), wherein the second lever (20) is connected at one of its ends with a second actuator (24) and wherein the third lever (21) is firmly connected with the nozzle element (14) and rotates the same around its axis (a) during operation of the second actuator (24).

5. Nozzle system according to claim 4, **characterized in that** the third lever (21) is supported articulated with its end which is remote from the connection element (22) with a further connection element (30) at the second lever (20).

6. Nozzle system according to claim 4 or 5, **characterized in that** the second actuator (24) is designed as electrical, pneumatical or hydraulical linear actuator.

7. Nozzle system according to one of claims 2 to 6, **characterized in that** the first and/or the second actuator (19, 24) are arranged outside of the base geometry (25) of the nozzle system (1).

8. Nozzle system according to one of claims 1 to 7, **characterized in that** it comprises an intermediate plate (26) in which the flow paths (4, 5) for the feeding of the plastic melt of the two components run in sections, wherein the flow paths (4, 5) are distanced from the centre axis (a) of the nozzle system (1) with equal distances.

9. Nozzle system according to one of claims 1 to 8, **characterized in that** the nozzle element (14) comprises a groove (27) running in circumferential direction in which the at least one fluid channel (15) ends, wherein one of the flow paths (5) for feeding of the plastic melt of one of the components ends in the region of the groove (27).

10. Nozzle system according to one of claims 1 to 9, **characterized in that** the two fluid channels (15, 16) form a linear flow path which extends under an angle (α) to the centre axis (a) of the nozzle system (1) in the region of the sprue (6), wherein the angle (α) is preferably between 30° and 60°.

## Revendications

1. Système de buse (1) d'une unité d'injection de machine de moulage par injection réalisée pour injecter des pièces moulées en matière plastique à partir d'au moins deux composants pour interagir avec au moins deux unités de plastification par matière plastique (2, 3), le système de buse (1) comportant deux chemins d'écoulement (4, 5) servant à amener la masse fondue de matière plastique des deux composants à une pointe de buse (6) et des moyens de soupape (7, 8) étant présents pour amener de façon commandée la masse fondue de matière plastique des deux composants à la pointe de buse (6) dans le système de buse (1) ;
**caractérisé en ce que** le système de buse (1) comporte :
- un corps de guidage (9) en forme de cylindre creux disposé fixement sur place, un premier chemin d'écoulement (4) menant dans la zone du corps de guidage (9) reposant à l'intérieur dans le plan radial et un deuxième chemin d'écoulement (5) menant dans la zone du corps de guidage (9) reposant à l'extérieur dans le plan radial ;
- une aiguille de buse (10) disposée concentriquement par rapport au corps de guidage (9) et disposée dans la zone du corps de guidage (9) reposant à l'intérieur dans le plan radial dont l'extrémité orientée vers la pointe de buse (6) comporte une section étanche (11) interagissant avec une contre-section (12) réalisée dans le corps de guidage (9), l'aiguille de buse (10) étant reliée, avec son extrémité éloignée de la pointe de buse (6), à un premier élément d'actionnement (13) réalisé pour exercer un mouvement de coulissement translationnel de l'aiguille de buse (10) ; et
- un élément de buse (14) disposé concentriquement par rapport au corps de guidage (9), disposé dans la zone du corps de guidage (9) reposant à l'extérieur dans le plan radial et comportant au moins un premier canal de fluide (15) pouvant être amené en liaison fluide avec au moins un deuxième canal de fluide (16) disposé dans le corps de guidage (9) et menant à la pointe de buse (6) par rotation de l'élément de buse (14), l'élément de buse (14) étant relié à un deuxième élément d'actionnement (17) réalisé pour exercer un mouvement de rotation de l'élément de buse (14).

2. Système de buse selon la revendication 1, **caractérisé en ce que** le premier élément d'actionnement (13) comporte un premier levier (18) disposé avec sa première extrémité de façon articulée dans le système de buse (1), ledit premier levier étant relié avec son autre extrémité à un premier actionneur (19), l'aiguille de buse (10) étant reliée à celui-ci entre les deux extrémités du premier levier (18).

3. Système de buse selon la revendication 2, **caractérisé en ce que** le premier actionneur (19) est réalisé sous la forme d'un actionneur linéaire électrique, pneumatique ou hydraulique.

4. Système de buse selon l'une quelconque des revendications 1 à 3, **caractérisé en ce que** le deuxième élément d'actionnement (17) comprend un deuxième et un troisième levier (20, 21) disposés parallèlement l'un par rapport à l'autre et reliés entre eux, au niveau d'une de leurs extrémités, au moyen d'un élément de liaison (22), le deuxième levier (20) étant disposé de façon articulée dans un axe (23), le deuxième levier (20) étant relié, au niveau d'une de ses extrémités, avec un deuxième actionneur (24) et le troisième levier (21) étant relié fixement à l'élément de buse (14) et le faisant pivoter autour de son axe (a) lors de l'actionnement du deuxième actionneur (24).

5. Système de buse selon la revendication 4, **caractérisé en ce que** le troisième levier (21) est disposé de façon articulée avec son extrémité éloignée de l'élément de liaison (22), avec un élément de liaison (30) supplémentaire au niveau du deuxième levier (20).

6. Système de buse selon la revendication 4 ou 5, **caractérisé en ce que** le deuxième actionneur (24) est réalisé sous la forme d'un actionneur linéaire électrique, pneumatique ou hydraulique.

7. Système de buse selon l'une quelconque des revendications 2 à 6, **caractérisé en ce que** le premier et/ou le deuxième actionneur (19, 24) sont disposés à l'extérieur de la forme géométrique de base (25) du système de buse (1).

8. Système de buse selon l'une quelconque des revendications 1 à 7, **caractérisé en ce qu'**il comporte une plaque intermédiaire (26) dans laquelle des chemins d'écoulement (4, 5) s'étendent pour amener par passages la masse fondue de matière plastique des deux composants, les chemins d'écoulement (4, 5) s'écartant de la même distance de l'axe central (a) du système de buse (1).

9. Système de buse selon l'une quelconque des revendications 1 à 8, **caractérisé en ce que** l'élément de buse (14) comporte une rainure (27) s'étendant dans la direction circonférentielle dans laquelle l'au moins un canal de fluide (15) débouche, le chemin d'écoulement (5) débouchant dans la zone de la rainure (27) pour amener la masse fondue de matière plastique des composants.

10. Système de buse selon l'une quelconque des revendications 1 à 9, **caractérisé en ce que** les deux canaux de fluide (15, 16) forment un chemin d'écoulement linéaire s'étendant selon un angle (α) par rapport à l'axe central (a) du système de buse (1) dans la zone de la pointe de buse (6), l'angle (α) étant de préférence compris entre 30° et 60°.
